# EUROPEAN PATENT APPLICATION

(11) **EP 4 819 521 A1**
(43) Date of publication of application: **07.10.2026**
(21) Application number: 24899209.1
(22) Date of filing: 26.06.2024
(51) Int. Cl.: H04L 1/1812

(54) **DATA FORWARDING METHOD, NETWORK DEVICE, AND STORAGE MEDIUM**

(30) Priority: 05.12.2023 CN 202311669532
(71) Applicant: ZTE CORPORATION, Shenzhen, Guangdong 518057 (CN)
(72) Inventor: LIU, Yu, Shenzhen, Guangdong 518057 (CN); XIE, Feng, Shenzhen, Guangdong 518057 (CN); WANG, Fei, Shenzhen, Guangdong 518057 (CN)
(74) Representative: Savi, Massimiliano
(86) International application number: PCT/CN2024/101483
(87) International publication number: WO 2025/118558

(57) **Abstract**

Provided in the present application are a data forwarding method, a network device, and a storage medium. The method comprises: firstly, acquiring data to be transmitted; then, adding a data sub-header to the data to be transmitted, so as to obtain first data, and caching the first data in a data cache region; when a data transmission grant is received, performing transport block generation processing on data in the data cache region, so as to obtain a transport block, wherein the transport block is cached in the data cache region or cached in an HARQ cache region; and subsequently, forwarding transport block.

## Description

### CROSS-REFERENCE TO RELATED APPLICATION

This application claims priority to Chinese patent application No. 202311669532.X, filed with the China National Intellectual Property Administration on December 05, 2023 and entitled "Data Forwarding Method, Network Device, and Storage Medium", the entire content of which is incorporated herein by reference.

### TECHNICAL FIELD

The embodiments of the present application relate to but are not limited to the technical field of communications, and in particular, to a data forwarding method, a network device, and a storage medium.

### BACKGROUND

In a wireless communication system (for example, a 5G communication system) in the related art, user plane data is generally session-based user data, such as voice call data, video call data, and Internet access data. During the transmission process, the data needs to undergo processing by a 4-layer user plane protocol stack. When the data is processed at each protocol stack layer, a corresponding protocol header of the protocol stack needs to be generated and added, and the data needs to be copied to a data buffer of the protocol layer to which the data belongs. This processing manner not only increases memory consumption but also increases the data processing latency. Therefore, this multi-layer protocol stack processing manner in the wireless communication system of the related art cannot satisfy the extremely high transmission rate requirement and the extremely low transmission latency requirement of future wireless communication systems such as 6G.

### SUMMARY

The embodiments of the present application provide a data forwarding method, a network device, and a storage medium, which can not only reduce memory consumption but also reduce data processing latency.

In accordance with one aspect of the present application, an embodiment provides a data forwarding method, including: acquiring data to be transmitted; adding a data sub-header to the data to be transmitted to obtain first data, and buffering the first data in a data buffer; in response to receiving a data transmission grant, performing transport block generation processing on data in the data buffer to obtain a transport block, wherein the transport block is buffered in the data buffer or buffered in a HARQ buffer; and forwarding the transport block.

In accordance with another aspect of the present application, an embodiment further provides a data forwarding method, including: acquiring a transport block, wherein the transport block includes a data sub-header; performing transport block parsing processing on the transport block according to the data sub-header, and buffering data obtained after parsing in a data buffer; performing data security reverse processing on data in the data buffer, such that the data in the data buffer is updated to first data; and forwarding the first data in the data buffer.

In accordance with another aspect of the present application, an embodiment further provides a network device, including a memory, a processor and a computer program stored in the memory and executable by the processor, wherein the computer program, when executed by the processor, causes the processor to perform the data forwarding method as described above.

In accordance with another aspect of the present application, an embodiment further provides a computer-readable storage medium, storing computer-executable instructions which, when executed by a processor, cause the processor to perform the data forwarding method as described above.

In accordance with another aspect of the present application, an embodiment further provides a computer program product, including a computer program or computer instructions, wherein the computer program or the computer instructions are stored in a computer-readable storage medium, a processor of a network device reads the computer program or the computer instructions from the computer-readable storage medium, and the processor executes the computer program or the computer instructions to cause the network device to execute the data forwarding method as described above.

### BRIEF DESCRIPTION OF DRAWINGS

FIG. 1 is a schematic diagram of a data forwarding flow in the related art;
FIG. 2 is a flowchart of a data forwarding method provided by an embodiment of the present application;
FIG. 3 is a flowchart of a data forwarding method provided by another embodiment of the present application;
FIG. 4 is a schematic diagram of a system architecture of a transmitting end device for executing a data forwarding method provided by an embodiment of the present application;
FIG. 5 is a schematic diagram of an operating principle of a transport block generation component provided by an embodiment of the present application;
FIG. 6 is a schematic diagram of a system architecture of a receiving end device for executing a data forwarding method provided by an embodiment of the present application;
FIG. 7 is a schematic diagram of a network device provided by an embodiment of the present application.

### DETAILED DESCRIPTION

In order to make the objects, technical solutions, and advantages of the present application clearer, the present application is further described in detail below in conjunction with the accompanying drawings and embodiments. It should be understood that the specific embodiments described herein are only used to explain the present application and are not intended to limit the present application.

It should be noted that although a logical order is shown in the flowcharts, in some cases, the steps shown or described may be performed in an order different from that in the flowcharts. In the description of the specification, the claims, and the above-mentioned drawings, "a plurality of (or multiple items)" means two or more, and "greater than", "less than", "exceed", etc. are understood as not including the present number, and "above", "below", "within", etc. are understood as including the present number. If "first", "second", etc. are described, they are only used for the purpose of distinguishing technical features, and cannot be understood as indicating or implying relative importance, or implicitly indicating the number of the indicated technical features, or implicitly indicating the order of the indicated technical features.

It is worth noting that, in current wireless communication systems (for example, 5G communication systems), the transmitted data is generally session-based communication data, such as voice call data, video call data, and Internet access data. The air interface transmission latency is 1 ms, and the peak transmission rate is 10 Gbit/s. In future wireless communication systems (for example, 6G communication systems), due to the support for new services such as Artificial Intelligence (AI), sensing, and computing power, and the expansion of application scenarios to various vertical industries, a higher data transmission rate and a lower data processing latency are required. Therefore, in future wireless communication systems, the air interface transmission latency is required to be reduced to 0.1 ms, and the peak transmission rate is required to be increased to 100 Gbit/s. That is, the performance of future wireless communication systems such as 6G needs to be improved by more than 10 times compared with current wireless communication systems such as 5G.

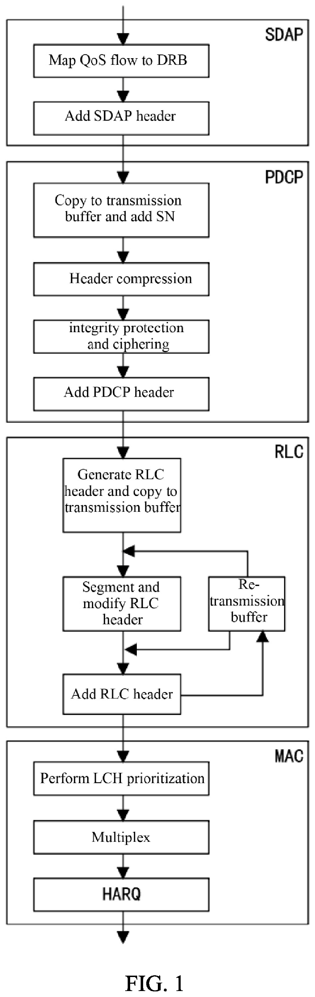

However, in current wireless communication systems (for example, 5G communication systems), user plane data needs to undergo processing by a 4-layer user plane protocol stack, wherein the 4-layer user plane protocol stack respectively consists of a Service Data Adaptation Protocol layer (SDAP), a Packet Data Convergence Protocol layer (PDCP), a Radio Link Control layer (RLC), and a Medium Access Control layer (MAC). The processing flow of the user plane data in the 4-layer user plane protocol stack can be referenced as shown in FIG. 1. Referring to the content in FIG. 1, it can be seen that when the data is processed at each protocol stack layer, a corresponding protocol header is generated and added, wherein the protocol headers include an SDAP header, a PDCP header, an RLC header, and a MAC header; in addition, when the data is transmitted between the 4 layers of the protocol stack, a plurality of data copies need to be performed, and each layer of the protocol stack needs to copy the data to its respective data buffer, wherein the data buffers include a transmission buffer of the PDCP, a transmission buffer and a retransmission buffer of the RLC, and a Hybrid Automatic Repeat reQuest (HARQ) buffer of the MAC. That is, this multi-layer protocol stack processing manner adopted by current wireless communication systems not only increases memory consumption but also increases data processing latency, and cannot satisfy the extremely high transmission rate requirement and the extremely low transmission latency requirement of future wireless communication systems such as 6G.

In order to reduce memory consumption and reduce data processing latency so as to satisfy the extremely high transmission rate requirement and the extremely low transmission latency requirement of future wireless communication systems such as 6G, the embodiments of the present application provide a data forwarding method, a network device, a computer-readable storage medium, and a computer program product, wherein, after acquiring data to be transmitted, a data sub-header is first added to the data to be transmitted to obtain first data, and the first data is buffered in a data buffer; upon receiving a data transmission grant, transport block generation processing is performed on data in the data buffer to obtain a transport block, wherein the transport block is buffered in the data buffer or buffered in a HARQ buffer; and then the transport block is forwarded. Since the first data is buffered in the data buffer after being obtained, and when the transport block generation processing is performed, the corresponding data in the same data buffer is processed, it is not necessary to perform a plurality of data copies and save the data to a plurality of data buffers of different protocol stacks as in the multi-layer protocol stack processing manner in current wireless communication systems, thereby effectively reducing memory consumption. Moreover, since the data sub-header is generated and added only once for the data, it is not necessary to generate and add a protocol header of each protocol stack layer for the data as in the multi-layer protocol stack processing manner in current wireless communication systems, thereby effectively reducing data processing latency, and thereby satisfying the extremely high transmission rate requirement and the extremely low transmission latency requirement of future wireless communication systems such as 6G.

Based on the above analysis, the embodiments of the present application are further described below in conjunction with the accompanying drawings.

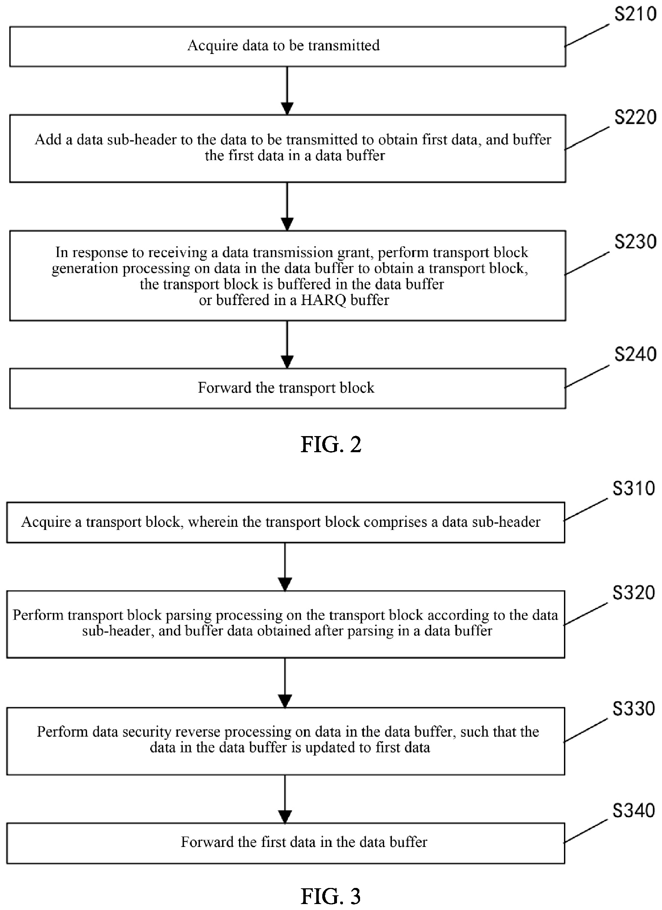

Referring to FIG. 2, FIG. 2 is a flowchart of a data forwarding method provided by an embodiment of the present application. The data forwarding method may be performed by a transmitting end device. The data forwarding method may include, but is not limited to, steps S210 to S240.

At S210, data to be transmitted is acquired.

At S220, a data sub-header is added to the data to be transmitted to obtain first data, and the first data is buffered in a data buffer.

At S230, when a data transmission grant is received, transport block generation processing is performed on data in the data buffer to obtain a transport block, wherein the transport block is buffered in the data buffer or buffered in a HARQ buffer.

At S240, the transport block is forwarded.

In an embodiment, functional components such as a transport block generation component and a data buffer may be deployed in the transmitting end device, wherein the transport block generation component is used to, after receiving the data transmission grant, generate a Transport block (TB) according to the data to be transmitted; the data buffer is used to buffer the data to be transmitted, and to provide a data processing object for functional components such as the transport block generation component. Therefore, the transport block generation processing performed on the data in the data buffer may be performed by the transport block generation component. By deploying functional components such as the transport block generation component and the data buffer in the transmitting end device, the manner of using a 4-layer protocol stack in the related art for separately processing and saving data can be simplified to be implemented by functional components, and only one addition of the data sub-header is needed, without distinguishing different protocol layers, and each functional component can be flexibly configured according to a service type, so that it is not necessary to generate and add a protocol header of each protocol stack layer for the data as in the related art, thereby effectively reducing data processing latency. In addition, since the first data is buffered in the data buffer after being obtained, and when the transport block generation component performs transport block generation processing, the corresponding data in the same data buffer is directly processed, it is not necessary to define a plurality of different data buffers as in the related art, and it is not necessary to perform a plurality of data copies as in the related art, so that unified storage management of the data can be achieved, and memory consumption can be effectively reduced. By adopting the method of reducing the generation and addition times of the protocol header and reducing the data copying process provided by the embodiments of the present application, memory consumption can be greatly reduced and data processing efficiency can be improved, thereby better ensuring the extremely high transmission rate requirement and the extremely low transmission latency requirement of future wireless communication systems.

In an embodiment, the data to be transmitted may include, but is not limited to, at least one of the following three types: an IP data packet, higher-layer signaling, and L2 internal data, wherein the L2 internal data may include, but is not limited to, at least one of the following three types from within the wireless communication system: AI data, sensing data, and computing power data. For example, in addition to data such as AI data, sensing data, and computing power data, the L2 internal data may also include other novel data from within the wireless communication system, which is not limited herein.

In an embodiment, when the data to be transmitted is an IP data packet, higher-layer signaling, or L2 internal data with a smaller data amount (that is, a small data packet generated within Layer 2), the data sub-header added to the data to be transmitted may carry a Sequence Number (SN) and/or carry segment offset information; when the data to be transmitted includes L2 internal data with a larger data amount (for example, a large file), the data sub-header added to the data to be transmitted may carry segment offset information and not carry a sequence number.

In an embodiment, when the data sub-header added to the data to be transmitted carries segment offset information, the segment offset information can be used to determine an offset of a data segment relative to a starting address of the data; a data segment (Segment) refers to a data segment obtained by segmenting data.

In an embodiment, the segment offset information may include only Segmentation Info (SI), or may include both the segmentation info and a Segment Offset (SO), wherein the segmentation info may be used to indicate a segment type of a corresponding data segment, and the segment offset may be used to represent an offset of the corresponding data segment relative to the starting address of the data. In an embodiment, the unit of the segment offset may be a byte, which is not limited herein.

In an embodiment, when the value of the segmentation info is a first value (for example, may be 0b00), it may indicate that the corresponding data segment is not segmented data, that is, the corresponding data segment is entire data. When the value of the segmentation info is a second value (for example, may be 0b01), it may indicate that the corresponding data segment is a first data segment (that is, Segment 1). When the value of the segmentation info is a third value (for example, may be 0b10), it may indicate that the corresponding data segment is a last data segment; for example, if the number of data segments is 10, then the corresponding data segment is Segment 10. When the value of the segmentation info is a fourth value (for example, may be 0b11), it may indicate that the corresponding data segment is a middle data segment; for example, if the number of data segments is 10, then the corresponding data segment is any one of Segment 2 to Segment 9.

In an embodiment, when the value of the segmentation info is the first value (for example, may be 0b00), since it indicates that the corresponding data segment is not segmented data, in this case, the segment offset information may include only the segmentation info.

In an embodiment, when the value of the segmentation info is the second value (for example, may be 0b01), since it indicates that the corresponding data segment is Segment 1, and the offset of Segment 1 relative to the starting address of the data is 0, in this case, the segment offset information may not include the offset of Segment 1 relative to the starting address of the data, that is, the segment offset information may include only the segmentation info.

In an embodiment, when the value of the segmentation info is the third value (for example, may be 0b10), since it indicates that the corresponding data segment is the last data segment, in this case, the segment offset information may include both the segmentation info and the segment offset, wherein the segment offset may give the offset of the starting address of the last data segment relative to the starting address of the data.

In an embodiment, when the value of the segmentation info is the fourth value (for example, may be 0b11), since it indicates that the corresponding data segment is a middle data segment, in this case, the segment offset information may include both the segmentation info and the segment offset, wherein the segment offset may give the offset of the starting address of the middle data segment relative to the starting address of the data.

In an embodiment, during the process of adding the data sub-header to the data to be transmitted to obtain the first data, and buffering the first data in the data buffer, a target logical channel and the data sub-header corresponding to the data to be transmitted may be first determined, then a target sub-data buffer corresponding to the data to be transmitted in the data buffer is determined according to the target logical channel, and then the data sub-header is added to the data to be transmitted to obtain the first data, and the first data is buffered in the target sub-data buffer. In the data buffer, a Logical Control Channel (LCH) may be used to manage the buffered data; for example, a plurality of sub-data buffers may be set in the data buffer, and each sub-data buffer corresponds to one LCH; when the first data with the data sub-header added needs to be buffered in the data buffer, the corresponding target logical channel may be first determined, then the corresponding target sub-data buffer is determined among the plurality of sub-data buffers of the data buffer, and then the first data is buffered in the target sub-data buffer. An illustration is given by way of an example: assuming that 3 sub-data buffers are set in the data buffer, wherein a first sub-data buffer corresponds to LCH 0, a second sub-data buffer corresponds to LCH 1, and a third sub-data buffer corresponds to LCH 2, then when the data sub-header is added to the data to be transmitted to obtain the first data and the first data is buffered in the data buffer, the target logical channel and the data sub-header corresponding to the data to be transmitted are first determined; assuming that the target logical channel corresponding to the data to be transmitted is LCH 1, then according to the sub-data buffer corresponding to LCH 1, the second sub-data buffer can be determined as the corresponding target sub-data buffer among the 3 sub-data buffers of the data buffer, then the data sub-header is added to the data to be transmitted to obtain the first data, and then the first data is buffered in the target sub-data buffer (that is, the second sub-data buffer).

In an embodiment, in the case where the data to be transmitted includes an IP data packet, when determining the target logical channel corresponding to the data to be transmitted, QoS flow mapping may be performed on the IP data packet, so as to match the IP data packet to the corresponding target logical channel. It should be noted that, in this case, a QoS flow mapping component may be deployed in the transmitting end device, and therefore, the operation of performing QoS flow mapping on the IP data packet to match the IP data packet to the corresponding target logical channel may be performed by the QoS flow mapping component. The IP data packet that has been subjected to QoS flow mapping is buffered in the target sub-data buffer corresponding to the corresponding target logical channel in the data buffer.

In an embodiment, in the case where the LCH corresponds to an SN, when the LCH is used to manage the buffered data in the data buffer, the sub-data buffer corresponding to the LCH may be further subdivided into a plurality of lower-level data buffers, and each lower-level data buffer corresponds to one SN, that is, each lower-level data buffer corresponds to one SN of the LCH. In this case, when the data to be transmitted includes at least one of an IP data packet, higher-layer signaling, and L2 internal data that needs to have a sequence number added (that is, L2 internal data with a smaller data amount), the target sub-data buffer used to buffer the first data corresponding to the data to be transmitted corresponds to a corresponding sequence number in the target logical channel corresponding to the data to be transmitted. An illustration is given by way of an example: assuming that 2 sub-data buffers are set in the data buffer, and each sub-data buffer is provided with 2 lower-level data buffers, wherein a first sub-data buffer corresponds to LCH 0, a second sub-data buffer corresponds to LCH 1, a first lower-level data buffer of the first sub-data buffer corresponds to SN 0 of LCH 0, a second lower-level data buffer of the first sub-data buffer corresponds to SN 1 of LCH 0, a first lower-level data buffer of the second sub-data buffer corresponds to SN 0 of LCH 1, and a second lower-level data buffer of the second sub-data buffer corresponds to SN 1 of LCH 1, then when the data sub-header is added to the data to be transmitted to obtain the first data and the first data is buffered in the data buffer, the target logical channel and the data sub-header corresponding to the data to be transmitted are first determined; assuming that the target logical channel corresponding to the data to be transmitted is LCH 1, and the data to be transmitted corresponds to SN 0 in LCH 1, then according to the lower-level data buffer corresponding to SN 0 of LCH 1, the first lower-level data buffer of the second sub-data buffer can be determined in the data buffer as the corresponding target sub-data buffer, then the data sub-header is added to the data to be transmitted to obtain the first data, and then the first data is buffered in the target sub-data buffer (that is, the first lower-level data buffer of the second sub-data buffer).

In an embodiment, when the data to be transmitted includes L2 internal data that does not need to have a sequence number added, the target sub-data buffer used to buffer the first data corresponding to the data to be transmitted only corresponds to the target logical channel corresponding to the data to be transmitted, that is, the sub-data buffer corresponding to the target logical channel corresponding to the data to be transmitted does not have subdivided lower-level data buffers, and the target sub-data buffer is the sub-data buffer itself corresponding to the target logical channel corresponding to the data to be transmitted.

In an embodiment, in the case where the data to be transmitted includes an IP data packet, after performing QoS flow mapping on the IP data packet to match the IP data packet to the corresponding target logical channel, header compression processing may also be performed on the IP data packet according to application needs. It should be noted that, in this case, a header compression processing component may be deployed in the transmitting end device, and therefore, the operation of performing header compression processing on the IP data packet may be performed by the header compression processing component. The IP data packet that has been subjected to header compression processing is buffered back to the corresponding buffer position in the data buffer.

In an embodiment, a security processing component may also be deployed in the transmitting end device, wherein the security processing component is used to perform operations such as integrity protection and encryption on the data to be transmitted. The data buffer is also capable of providing a data processing object for the security processing component.

In an embodiment, the security processing component may, before receiving the data transmission grant, perform data security processing on the first data in the data buffer to obtain second data, wherein the second data is the data in the data buffer used for performing the transport block generation processing, that is, the transport block generation component may perform the transport block generation processing on the second data in the data buffer to obtain the transport block. In another embodiment, the security processing component may, after receiving the data transmission grant, segment the first data according to the data transmission grant to obtain a data segment, and then perform data security processing on the data segment to obtain third data, wherein the third data is the data in the data buffer used for performing the transport block generation processing, that is, the transport block generation component may perform the transport block generation processing on the third data in the data buffer to obtain the transport block. By deploying functional components such as the security processing component, the transport block generation component, and the data buffer in the transmitting end device, the manner of using a 4-layer protocol stack in the related art for separately processing and saving data can be simplified to be implemented by functional components, and only one addition of the data sub-header is needed, without distinguishing different protocol layers, and each functional component can be flexibly configured according to a service type, so that it is not necessary to generate and add a protocol header of each protocol stack layer for the data as in the related art, thereby effectively reducing data processing latency. In addition, the security processing component and the transport block generation component can directly perform the data security processing and the transport block generation processing on the corresponding data in the same data buffer, without defining a plurality of different data buffers as in the related art, and without performing a plurality of data copies as in the related art, so that unified storage management of the data can be achieved, and memory consumption can be effectively reduced.

In an embodiment, after receiving the data transmission grant (that is, in an online processing state), when performing the transport block generation processing on the data in the data buffer (that is, the second data or the third data), the data in the data buffer may be assembled to form the transport block. Wherein, when the data security processing is performed before receiving the data transmission grant, the data in the data buffer is the second data on which data security processing has been performed; at this time, after receiving the data transmission grant, if the data amount of the second data of a current logical channel is equal to a current grant size, the transport block may be assembled according to the second data itself; if the data amount of the second data of the current logical channel is greater than the current grant size, the second data may be first segmented according to the current grant size to obtain a data segment, and then the transport block is assembled according to the data segment, and at this time, remaining data of the second data may be used to assemble a subsequent transport block; if the data amount of the second data of the current logical channel is less than the current grant size, the second data of other logical channels may be reused or padding data (Padding) may be supplemented, such that the total data amount of the obtained data is consistent with the current grant size, and then the obtained data is assembled to form the transport block. In addition, when the data security processing is performed after receiving the data transmission grant, after receiving the data transmission grant (that is, in the online processing state), the first data is segmented according to the current grant size to obtain a data segment, then the data security processing is performed on the currently obtained data segment to obtain the third data, and then the transport block is assembled according to the third data, and at this time, the remaining data of the first data may be used to assemble a subsequent transport block. When a new data transmission grant is received again (that is, in the online processing state), if the new grant size is smaller than the data amount of the remaining data of the first data, the remaining data of the first data is re-segmented according to the new grant size to obtain a new data segment, then the data security processing is performed on the new data segment to obtain new third data, and then the transport block is assembled according to the new third data; if the new grant size is equal to the data amount of the remaining data of the first data, the remaining data of the first data is not re-segmented, but the data security processing is directly performed on the remaining data of the first data to obtain new third data, and then the transport block is assembled according to the new third data; if the new grant size is greater than the data amount of the remaining data of the first data, the first data of other logical channels may be reused or padding data (Padding) may be supplemented, such that the total data amount of the obtained data is consistent with the new grant size, and then the obtained data is assembled to form the transport block.

In an embodiment, after receiving the data transmission grant (that is, in the online processing state), during the process of performing the transport block generation processing on the data in the data buffer, it may be first determined whether the data in the data buffer needs to be segmented or re-segmented; when the determination result is that the data in the data buffer needs to be segmented or re-segmented, the data sub-header saved in the data buffer needs to be modified. For example, at this time, it may be necessary to modify the SI, SO, and length field in the data sub-header. In addition, when the determination result is that the data in the data buffer does not need to be segmented or re-segmented, the data sub-header saved in the data buffer is not modified.

In an embodiment, after performing the transport block generation processing on the data in the data buffer to obtain the transport block, before the next data transmission grant is received, that is, in an offline processing state, the data sub-header saved in the data buffer may be first modified according to the remaining data in the data buffer. For example, at this time, the SI, SO, and length field in the data sub-header saved in the data buffer may be first modified according to the remaining data in the data buffer.

In an embodiment, the data in the data buffer may correspond to a data state label, and the data state label is used to determine whether the data in the data buffer needs to be transmitted or retransmitted. The data state label may include at least one of the following three state labels: a data transmission state label, an ARQ acknowledgment state label, and a HARQ acknowledgment state label. It should be noted that when the data buffer is used as a HARQ buffer, the data in the data buffer corresponds to a HARQ acknowledgment state label. In addition, in an embodiment, when HARQ does not need to multiplex a plurality of logical channels, the data buffer may also be used as the HARQ buffer.

In an embodiment, in the case where the transmitting end device is not deployed with an independent HARQ buffer, after performing the transport block generation processing on the data in the data buffer to obtain the transport block, the transport block may be buffered in the data buffer, so that a subsequent step can send the transport block from the data buffer to an encoding buffer, such that the encoding buffer can forward the transport block through a Physical Layer (PHY). In this case, the data buffer may be used as the HARQ buffer.

In an embodiment, in the case where the transmitting end device is also deployed with an independent HARQ buffer, after performing the transport block generation processing on the data in the data buffer to obtain the transport block, the transport block may be buffered in the HARQ buffer, so that a subsequent step can send the transport block from the HARQ buffer to the encoding buffer, such that the encoding buffer can forward the transport block through the Physical Layer (PHY).

Referring to FIG. 3, FIG. 3 is a flowchart of a data forwarding method provided by another embodiment of the present application. The data forwarding method may be performed by a receiving end device. The data forwarding method may include, but is not limited to, steps S310 to S340.

At S310, a transport block is acquired, wherein the transport block includes a data sub-header.

At S320, transport block parsing processing is performed on the transport block according to the data sub-header, and data obtained after parsing is buffered in a data buffer.

At S330, data security reverse processing is performed on data in the data buffer, such that the data in the data buffer is updated to first data.

At S340, the first data in the data buffer is forwarded.

In an embodiment, functional components such as a transport block parsing component, a security processing component, and a data buffer may be deployed in the receiving end device, wherein the transport block parsing component is used to perform the transport block parsing processing on a transport block; the data buffer is used to buffer the data obtained after performing the transport block parsing processing, and to provide a data processing object for functional components such as the security processing component; the security processing component is used to perform operations such as decryption and integrity check on the data in the data buffer. Therefore, the transport block parsing processing performed on the transport block according to the data sub-header may be performed by the transport block parsing component, and the data security reverse processing performed on the data in the data buffer may be performed by the security processing component. By deploying functional components such as the transport block parsing component, the security processing component, and the data buffer in the receiving end device, the manner of using a 4-layer protocol stack in the related art for separately processing and saving data can be simplified to be implemented by functional components, without distinguishing different protocol layers, and each functional component can be flexibly configured according to a service type, so that it is not necessary to perform protocol de-header processing for each protocol stack layer as in the related art, thereby effectively reducing data processing latency. In addition, since only one data buffer needs to be used, it is not necessary to define a plurality of different data buffers as in the related art, and it is not necessary to perform a plurality of data copies as in the related art, so that unified storage management of the data can be achieved, and memory consumption can be effectively reduced. By adopting the method of reducing the processing for the protocol header and reducing the data copying process provided by the embodiments of the present application, memory consumption can be greatly reduced and data processing efficiency can be improved, thereby better ensuring the extremely high transmission rate requirement and the extremely low transmission latency requirement of future wireless communication systems.

In an embodiment, the data carried in the transport block may include, but is not limited to, at least one of the following three types: an IP data packet, higher-layer signaling, and L2 internal data, wherein the L2 internal data may include, but is not limited to, at least one of the following three types from within the wireless communication system: AI data, sensing data, and computing power data. For example, in addition to data such as AI data, sensing data, and computing power data, the L2 internal data may also include other novel data from within the wireless communication system, which is not limited herein.

In an embodiment, when the data carried in the transport block is an IP data packet, higher-layer signaling, or L2 internal data with a smaller data amount (that is, a small data packet generated within Layer 2), the data sub-header in the transport block may carry an SN and/or carry segment offset information; when the data carried in the transport block includes L2 internal data with a larger data amount (for example, a large file), the data sub-header in the transport block may carry segment offset information and not carry an SN.

In an embodiment, when the data sub-header carries segment offset information, the segment offset information can be used to determine an offset of a data segment relative to a starting address of the data; a data segment refers to a data segment obtained by segmenting data.

In an embodiment, the segment offset information may include only the segmentation info, or may include both the segmentation info and the segment offset, wherein the segmentation info may be used to indicate a segment type of a corresponding data segment, and the segment offset may be used to represent an offset of the corresponding data segment relative to the starting address of the data. In an embodiment, the unit of the segment offset may be a byte, which is not limited herein.

In an embodiment, when the value of the segmentation info is a first value (for example, may be 0b00), it may indicate that the corresponding data segment is not segmented data, that is, the corresponding data segment is entire data. When the value of the segmentation info is a second value (for example, may be 0b01), it may indicate that the corresponding data segment is a first data segment (that is, Segment 1). When the value of the segmentation info is a third value (for example, may be 0b10), it may indicate that the corresponding data segment is a last data segment; for example, if the number of data segments is 10, then the corresponding data segment is Segment 10. When the value of the segmentation info is a fourth value (for example, may be 0b11), it may indicate that the corresponding data segment is a middle data segment; for example, if the number of data segments is 10, then the corresponding data segment is any one of Segment 2 to Segment 9.

In an embodiment, when the value of the segmentation info is the first value (for example, may be 0b00), since it indicates that the corresponding data segment is not segmented data, in this case, the segment offset information may include only the segmentation info.

In an embodiment, when the value of the segmentation info is the second value (for example, may be 0b01), since it indicates that the corresponding data segment is Segment 1, and the offset of Segment 1 relative to the starting address of the data is 0, in this case, the segment offset information may not include the offset of Segment 1 relative to the starting address of the data, that is, the segment offset information may include only the segmentation info.

In an embodiment, when the value of the segmentation info is the third value (for example, may be 0b10), since it indicates that the corresponding data segment is the last data segment, in this case, the segment offset information may include both the segmentation info and the segment offset, wherein the segment offset may give the offset of the starting address of the last data segment relative to the starting address of the data.

In an embodiment, when the value of the segmentation info is the fourth value (for example, may be 0b11), since it indicates that the corresponding data segment is a middle data segment, in this case, the segment offset information may include both the segmentation info and the segment offset, wherein the segment offset may give the offset of the starting address of the middle data segment relative to the starting address of the data.

In an embodiment, during the process of buffering the data obtained after parsing in the data buffer, a target logical channel corresponding to the data obtained after parsing may be first determined, then according to the target logical channel, a target sub-data buffer corresponding to the data obtained after parsing in the data buffer is determined, and then the data obtained after parsing is buffered in the target sub-data buffer. In the data buffer, the LCH may be used to manage the buffered data; for example, a plurality of sub-data buffers may be set in the data buffer, and each sub-data buffer corresponds to one LCH; when the data obtained after parsing needs to be buffered in the data buffer, the corresponding target logical channel may be first determined, then the corresponding target sub-data buffer is determined among the plurality of sub-data buffers of the data buffer, and then the data obtained after parsing is buffered in the target sub-data buffer. An illustration is given by way of an example: assuming that 3 sub-data buffers are set in the data buffer, wherein a first sub-data buffer corresponds to LCH 0, a second sub-data buffer corresponds to LCH 1, and a third sub-data buffer corresponds to LCH 2, then when the data obtained after parsing is buffered in the data buffer, the target logical channel corresponding to the data obtained after parsing is first determined; assuming that the target logical channel corresponding to the data obtained after parsing is LCH 1, then according to the sub-data buffer corresponding to LCH 1, the second sub-data buffer can be determined as the corresponding target sub-data buffer among the 3 sub-data buffers of the data buffer, and then the data obtained after parsing is buffered in the target sub-data buffer (that is, the second sub-data buffer).

In an embodiment, during the process of performing the data security reverse processing on the data in the data buffer such that the data in the data buffer is updated to the first data, the data security reverse processing may be first separately performed on data segments under the same target logical channel, then the plurality of data segments on which the data security reverse processing has been performed are restored to the first data, and then the data in the data buffer is updated to the first data. In another embodiment, during the process of performing the data security reverse processing on the data in the data buffer such that the data in the data buffer is updated to the first data, all data segments under the same target logical channel that have been completely collected may be first restored to a piece of entire data, then the data security reverse processing is performed on the entire data to obtain the first data, and then the data in the data buffer is updated to the first data.

In an embodiment, in the case where the first data corresponds to a sequence number, before forwarding the first data in the data buffer, the first data in the data buffer may be first delivered to an upper layer in the order of the sequence numbers. For example, in the case where the receiving end device is further deployed with a header decompression processing component, and the first data includes an IP data packet, the IP data packet in the data buffer may be first delivered to the header decompression processing component in the order of the sequence numbers, such that the header decompression processing component first performs header decompression processing on the IP data packet, and then the IP data packet that has been subjected to the header decompression processing is forwarded. It should be noted that the operation of delivering the first data in the data buffer to the upper layer in the order of the sequence numbers may be performed by a reordering component deployed in the receiving end device.

In an embodiment, the first data may include, but is not limited to, at least one of the following three types: an IP data packet, higher-layer signaling, and L2 internal data; in the case where the first data includes an IP data packet, when the receiving end device is further deployed with a QoS flow reverse mapping component, before forwarding the first data in the data buffer, QoS flow reverse mapping may also be first performed on the IP data packet by the QoS flow reverse mapping component. For example, the header decompression processing may be first performed on the IP data packet by the header decompression processing component to obtain the IP data packet that has been subjected to the header decompression processing, then the QoS flow reverse mapping is performed by the QoS flow reverse mapping component on the IP data packet that has been subjected to the header decompression processing, to obtain the IP data packet that has been subjected to the QoS flow reverse mapping, and then the IP data packet that has been subjected to the QoS flow reverse mapping is forwarded.

The data forwarding method provided by the embodiments of the present application is described in detail below with an example.

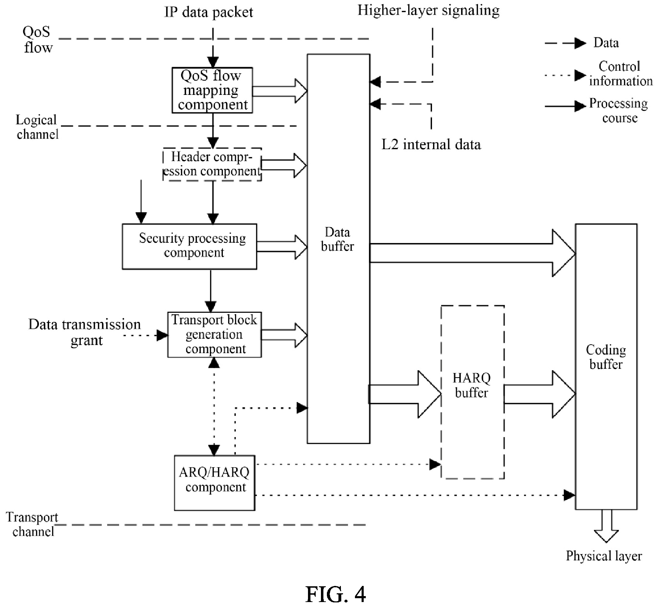

For example, as shown in FIG. 4, FIG. 4 is a schematic diagram of a system architecture of a transmitting end device for executing a data forwarding method provided by an embodiment of the present application. In the system architecture of the transmitting end device shown in FIG. 4, a QoS flow mapping component, a header compression processing component, a security processing component, a transport block generation component, an ARQ/HARQ component, a data buffer, a HARQ buffer, and an encoding buffer may be deployed, wherein the header compression processing component and the HARQ buffer are optionally deployed, that is, the transmitting end device may be deployed with the header compression processing component and the HARQ buffer, or may not be deployed with the header compression processing component and the HARQ buffer, and appropriate selection may be made according to actual application situations, which is not limited herein.

In FIG. 4, using one data buffer is beneficial for achieving unified management of data buffering, that is, the functions can each be componentized, that is, the QoS flow mapping function, the header compression function, the security processing function, the transport block generation function, the ARQ/HARQ function, etc., are componentized, and the plurality of protocol layers as in the related art no longer need to be used; by having the functional components directly operate on the unified data buffer, the manner of performing a plurality of data copies as in the related art can be omitted, thereby effectively reducing memory consumption and reducing data processing latency.

In FIG. 4, the data buffer is capable of being used to buffer data, and the data may include, but is not limited to, an IP data packet, higher-layer signaling, L2 internal data, etc. After the data arrives at a forwarding plane protocol stack, the data is all stored in this data buffer, and each functional component may perform retrieve and store operations on the data buffered in the data buffer through a data bus or other data access interface.

In FIG. 4, when the transmitting end device is deployed with an independent HARQ buffer, the HARQ buffer may be used to buffer the transport block that has been assembled before encoding. When HARQ retransmission needs to be performed, the transport block that needs to be retransmitted may be fetched from the HARQ buffer. In addition, when HARQ does not need to multiplex a plurality of logical channels, the data buffer may be used as the HARQ buffer, and in this case, the transmitting end device may not be deployed with an independent HARQ buffer.

In FIG. 4, the encoding buffer is capable of being used to save the transport block after encoding.

In FIG. 4, the transport block generation component may also, according to the data transmission grant and the data state maintained by the ARQ/HARQ component (for example, whether the data is valid, whether the data has been transmitted, whether the data has been acknowledged as received, etc.), perform fetching on the data in the data buffer and generate the transport block.

On the basis of the system architecture shown in FIG. 4, after an IP data packet enters the transmitting end device, QoS flow mapping is first performed to match it to a corresponding logical channel and an SN under the logical channel; after the IP data packet is matched to the SN under the corresponding logical channel, the IP data packet is buffered in the target sub-data buffer corresponding to the SN under the logical channel in the data buffer; then in the offline processing state, header compression processing (when the header compression processing component is deployed) and data security processing are performed on the IP data packet saved in the data buffer; after the data transmission grant is received, the online processing state is entered, and the IP data packet in the data buffer is used to generate the transport block according to an ARQ/HARQ result; then the transport block is encoded, and the encoded transport block is sent to the PHY for external forwarding. During the entire process, each functional component directly fetches the data in the data buffer.

On the basis of the system architecture shown in FIG. 4, after higher-layer signaling enters the transmitting end device, a logical channel corresponding to the higher-layer signaling and an SN under the logical channel are first determined, and the higher-layer signaling is buffered in the target sub-data buffer corresponding to the SN under the logical channel in the data buffer; then in the offline processing state, data security processing is performed on the higher-layer signaling saved in the data buffer; after the data transmission grant is received, the online processing state is entered, and the higher-layer signaling in the data buffer is used to generate the transport block according to the ARQ/HARQ result; then the transport block is encoded, and the encoded transport block is sent to the PHY for external forwarding. During the entire process, each functional component directly fetches the data in the data buffer.

On the basis of the system architecture shown in FIG. 4, after L2 internal data enters the transmitting end device, it is first determined whether the L2 internal data needs to have an SN added and whether header compression processing needs to be performed, wherein L2 internal data with a smaller data amount (that is, a small data packet generated within Layer 2) needs to have an SN added, and L2 internal data with a larger data amount (for example, a large data block such as a large file) does not need to have an SN added. If it is determined that an SN does not need to be added, then after the logical channel corresponding to the L2 internal data is determined, the L2 internal data is directly buffered in the target sub-data buffer corresponding to the logical channel in the data buffer; then in the offline processing state or the online processing state, data security processing is performed on the L2 internal data saved in the data buffer; after the data transmission grant is received, the online processing state is entered, and the L2 internal data in the data buffer is used to generate the transport block according to the ARQ/HARQ result; then the transport block is encoded, and the encoded transport block is sent to the PHY for external forwarding. During the entire process, each functional component directly fetches the data in the data buffer.

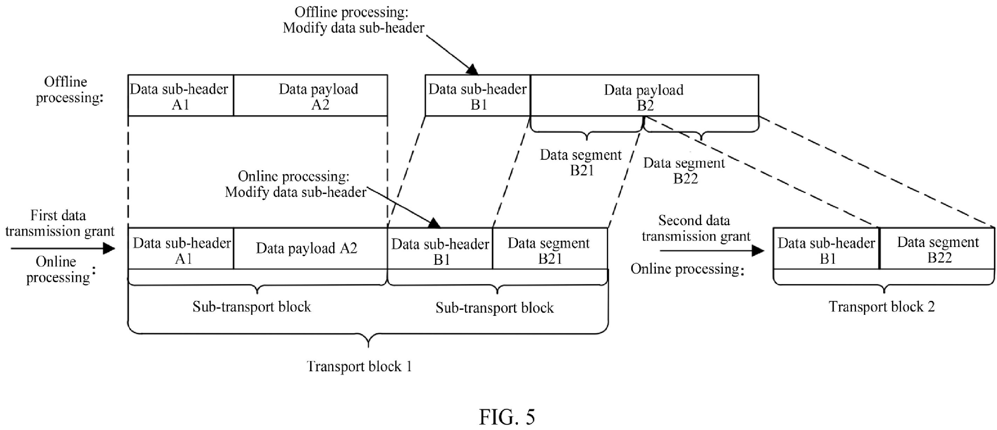

For example, as shown in FIG. 5, FIG. 5 is a schematic diagram of an operating principle of a transport block generation component provided by an embodiment of the present application. In FIG. 5, during the operating process, the transport block generation component may be in two operating states: the offline processing state and the online processing state. The online processing state refers to a state between receiving the data transmission grant and obtaining the transport block by performing the transport block generation processing on the data in the data buffer; the offline processing state refers to a state before receiving the data transmission grant.

In FIG. 5, it is assumed that data A and data B are buffered in the data buffer, wherein data A and data B are data under different logical channels, data A has a data sub-header Al and a data payload A2, and data B has a data sub-header B1 and a data payload B2. When the 1st data transmission grant is received, the online processing state will be entered, and in this online processing state, when it is determined according to the 1st data transmission grant that the granted data amount is greater than the data amount of data A, then a part of data B may be reused, that is, the data payload B2 of data B needs to be segmented. After the data payload B2 of data B is segmented to obtain a data segment B21 and remaining data B22, a transport block to be transmitted is assembled according to data A, the data sub-header B1, and the data segment B21. Since data A does not need to be segmented, the data sub-header A1 does not need to be modified, but since the data segment B21 is segmented data and is the first data segment, the data sub-header B1 needs to be modified (for example, the SI, SO, and length field in the data sub-header B1 are modified), and at this time, the transport block 1 currently to be transmitted is obtained. After this transport block 1 is generated, the offline processing state will be entered, and in this offline processing state, the data sub-header B1 saved in the data buffer may be first modified according to the remaining data B22; for example, at this time, the SI, SO, and length field in the data sub-header B1 saved in the data buffer may be modified according to the remaining data B22. When the 2nd data transmission grant is received, the online processing state will be entered, and in this online processing state, when it is determined according to the 2nd data transmission grant that the granted data amount is exactly the data amount of the data sub-header B1 plus the remaining data B22, then it can be determined that the remaining data B22 does not need to be re-segmented, and therefore, in the current online processing state, the data sub-header B1 does not need to be modified, so that according to the data sub-header B1 and the remaining data B22 currently saved in the data buffer, the transport block 2 currently to be transmitted is obtained.

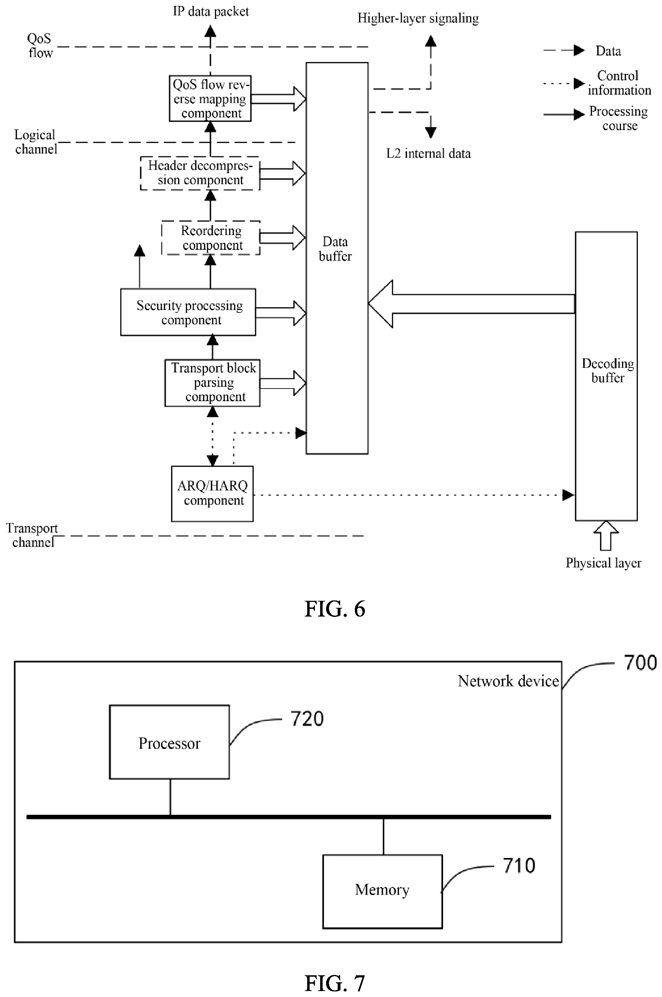

For example, as shown in FIG. 6, FIG. 6 is a schematic diagram of a system architecture of a receiving end device for executing a data forwarding method provided by an embodiment of the present application. In the system architecture of the receiving end device shown in FIG. 6, a QoS flow reverse mapping component, a header decompression processing component, a reordering component, a security processing component, a transport block parsing component, an ARQ/HARQ component, a data buffer, and a decoding buffer may be deployed, wherein the header decompression processing component and the reordering component are optionally deployed, that is, the receiving end device may be deployed with the header decompression processing component and the reordering component, or may not be deployed with the header decompression processing component and the reordering component, and appropriate selection may be made according to actual application situations, which is not limited herein.

In FIG. 6, using one data buffer is beneficial for achieving unified management of data buffering, that is, the functions can each be componentized, that is, the QoS flow reverse mapping function, the header decompression function, the reordering function, the security processing function, the transport block parsing function, the ARQ/HARQ function, etc., are componentized, and the plurality of protocol layers as in the related art no longer need to be used; by having the functional components directly operate on the unified data buffer, the manner of performing a plurality of data copies as in the related art can be omitted, thereby effectively reducing memory consumption and reducing data processing latency.

In FIG. 6, the decoding buffer is capable of being used to save soft information before decoding.

In FIG. 6, the data buffer is capable of being used to buffer data obtained after performing the transport block parsing processing. After the transport block parsing component completes the parsing processing on the transport block, the parsed data is buffered in the data buffer. In addition, the security processing component, the reordering component, the header decompression processing component, etc., may also directly fetch the data in this data buffer.

In FIG. 6, the ARQ/HARQ component is capable of being used to reply an ARQ result and a HARQ result to the transmitting end device.

Referring to FIG. 7, an embodiment of the present application further discloses a network device. The network device 700 includes a memory 710, a processor 720, and a computer program stored on the memory 710 and runnable on the processor 720, and the processor 720 implements the data forwarding method as in any one of the foregoing embodiments when executing the computer program.

In addition, an embodiment of the present application further discloses a computer-readable storage medium, in which computer-executable instructions are stored, wherein the computer-executable instructions are used to execute the data forwarding method as in any one of the foregoing embodiments.

In addition, an embodiment of the present application further discloses a computer program product, including a computer program or computer instructions, wherein the computer program or the computer instructions are stored in a computer-readable storage medium, a processor of a network device reads the computer program or the computer instructions from the computer-readable storage medium, and the processor executes the computer program or the computer instructions to cause the network device to execute the data forwarding method as in any one of the foregoing embodiments.

Those of ordinary skill in the art can understand that all or some of the steps and systems in the methods disclosed above can be implemented as software, firmware, hardware, and appropriate combinations thereof. Some physical components or all physical components can be implemented as software executed by a processor, such as a central processing unit, a digital signal processor, or a microprocessor, or as hardware, or as integrated circuits, such as application-specific integrated circuits. Such software can be distributed on a computer-readable medium, which can include computer storage media (or non-transitory media) and communication media (or transitory media). As is well known to those of ordinary skill in the art, the term computer storage media includes volatile and non-volatile, removable and non-removable media implemented in any method or technology for storing information (such as computer-readable instructions, data structures, program modules, or other data). Computer storage media include, but are not limited to, RAM, ROM, EEPROM, flash memory or other memory technology, CD-ROM, Digital Versatile Disk (DVD), or other optical disk storage, magnetic cassettes, magnetic tape, magnetic disk storage, or other magnetic storage devices, or any other medium that can be used to store the desired information and that can be accessed by a computer. Furthermore, as is well known to those of ordinary skill in the art, communication media typically include computer-readable instructions, data structures, program modules, or other data in a modulated data signal such as a carrier wave or other transmission mechanism, and may include any information delivery medium.

The embodiments of the present application have been described above. However, the present application is not limited to the foregoing embodiments, and those skilled in the art may also make various equivalent variations or substitutions without departing from the substance of the present application, and such equivalent variations or substitutions are all included within the scope defined by the claims of the present application.

## Claims

1. A data forwarding method, comprising:
acquiring data to be transmitted;
adding a data sub-header to the data to be transmitted to obtain first data, and buffering the first data in a data buffer;
in response to receiving a data transmission grant, performing transport block generation processing on data in the data buffer to obtain a transport block, wherein the transport block is buffered in the data buffer or buffered in a HARQ buffer; and
forwarding the transport block.

2. The method of claim 1, wherein the adding the data sub-header to the data to be transmitted to obtain the first data, and buffering the first data in the data buffer, comprises:
determining a target logical channel and the data sub-header corresponding to the data to be transmitted;
determining, according to the target logical channel, a target sub-data buffer corresponding to the data to be transmitted in the data buffer;
adding the data sub-header to the data to be transmitted to obtain the first data; and
buffering the first data in the target sub-data buffer.

3. The method of claim 2, wherein in response to the data to be transmitted comprising an IP data packet, the determining the target logical channel corresponding to the data to be transmitted comprises:
performing QoS flow mapping on the IP data packet to match the IP data packet to the target logical channel.

4. The method of claim 2, wherein in response to the data to be transmitted comprising at least one of the following, the target sub-data buffer corresponds to a corresponding sequence number in the target logical channel corresponding to the data to be transmitted:
an IP data packet;
higher-layer signaling; or
L2 internal data that needs to have a sequence number added.

5. The method of claim 2, wherein in response to the data to be transmitted comprising L2 internal data that does not need to have a sequence number added, the target sub-data buffer corresponds to the target logical channel corresponding to the data to be transmitted.

6. The method of claim 1, wherein in response to the data to be transmitted comprising an IP data packet, the method further comprises:
performing header compression processing on the IP data packet.

7. The method of claim 1, wherein the method further comprises one of the following:
prior to receiving the data transmission grant, performing data security processing on the first data in the data buffer to obtain second data, wherein the second data is data in the data buffer used for performing the transport block generation processing;
in response to receiving the data transmission grant, segmenting the first data according to the data transmission grant to obtain a data segment, and then performing data security processing on the data segment to obtain third data, wherein the third data is data in the data buffer used for performing the transport block generation processing.

8. The method of claim 1, wherein in a process of performing the transport block generation processing on the data in the data buffer, the method further comprises:
determining whether the data in the data buffer needs to be segmented or re-segmented;
in response to the data in the data buffer needing to be segmented or re-segmented, modifying the data sub-header in the data buffer;
or, in response to the data in the data buffer not needing to be segmented or re-segmented, not modifying the data sub-header in the data buffer.

9. The method of claim 1, wherein after performing the transport block generation processing on the data in the data buffer to obtain the transport block, the method further comprises:
modifying the data sub-header in the data buffer according to remaining data in the data buffer.

10. The method of claim 1, wherein the data in the data buffer corresponds to a data state label, and the data state label is used to determine whether the data in the data buffer needs to be transmitted or retransmitted.

11. The method of claim 10, wherein the data state label comprises at least one of the following:
a data transmission state label;
an ARQ acknowledgment state label; or
a HARQ acknowledgment state label.

12. A data forwarding method, comprising:
acquiring a transport block, wherein the transport block comprises a data sub-header;
performing transport block parsing processing on the transport block according to the data sub-header, and buffering data obtained after parsing in a data buffer;
performing data security reverse processing on data in the data buffer, such that the data in the data buffer is updated to first data; and
forwarding the first data in the data buffer.

13. The method of claim 12, wherein the buffering the data obtained after parsing in the data buffer comprises:
determining a target logical channel corresponding to the data obtained after parsing;
determining, according to the target logical channel, a target sub-data buffer corresponding to the data obtained after parsing in the data buffer; and
buffering the data obtained after parsing in the target sub-data buffer.

14. The method of claim 13, wherein the data in the data buffer area on which the data security reverse processing is performed comprises one of the following:
a data segment under the same target logical channel; or
data obtained after all data segments under the same target logical channel are completely collected.

15. The method of claim 12, wherein in response to the first data corresponding to a sequence number, prior to the forwarding the first data in the data buffer area, the method further comprises:
delivering the first data in the data buffer area to an upper layer in the order of the sequence number.

16. The method of claim 12, wherein in response to the first data comprising an IP data packet, prior to the forwarding the first data in the data buffer area, the method further comprises:
performing header decompression processing on the IP data packet.

17. The method of claim 12, wherein in response to the first data comprising an IP data packet, prior to the forwarding the first data in the data buffer area, the method further comprises:
performing QoS flow reverse mapping on the IP data packet.

18. The method of claim 12, wherein the first data comprises at least one of the following:
an IP data packet;
higher-layer signaling; or
L2 internal data.

19. A network device, comprising a memory, a processor and a computer program stored in the memory and executable by the processor, wherein the computer program, when executed by the processor, causes the processor to perform the data forwarding method of any of claims 1 to 18.

20. A computer-readable storage medium, storing computer-executable instructions which, when executed by a processor, cause the processor to perform the data forwarding method of any of claims 1 to 18.
